# FASCICULE DE BREVET EUROPEEN

(11) **EP 4 313 636 B1**
(45) Date de publication et mention de la délivrance du brevet: **09.04.2025**
(21) Numéro de dépôt: 22710689.5
(22) Date de dépôt: 24.02.2022
(51) Int. Cl.: B60G 13/00, B62D 25/08, B62D 65/12

(54) **DISPOSITIF POUR LIMITER LE DEBATTEMENT D'UN AMORTISSEUR DE VEHICULE NOTAMMENT AUTOMOBILE**
VORRICHTUNG ZUR BEGRENZUNG DER BEWEGUNG EINES FAHRZEUGSTOSSDÄMPFERS, INSBESONDERE EINES KRAFTFAHRZEUGSTOSSDÄMPFERS
DEVICE FOR LIMITING THE TRAVEL OF A VEHICLE SHOCK ABSORBER, IN PARTICULAR A MOTOR VEHICLE SHOCK ABSORBER

(30) Priorité: 29.03.2021 FR 2103174
(43) Date de publication de la demande: 07.02.2024
(73) Titulaire: Stellantis Auto SAS, 78300 Poissy (FR)
(72) Inventeur: BENANE, Said, 94240 L HAY LES ROSES (FR)
(74) Mandataire: BCIP
(86) Numéro de dépôt international: PCT/FR2022/050334
(87) Numéro de publication internationale: WO 2022/207989

(56) Documents cités:
- WO-A1-2015/040672
- WO-A1-2018/206868

## Description

L'invention concerne un dispositif pour limiter le débattement d'un amortisseur de véhicule, notamment automobile, et un véhicule équipé d'au moins un tel dispositif.

Le dispositif conforme à l'invention trouve une application particulière en partie arrière des véhicules automobiles.

On connait du document WO 2015 040672 un agencement sur une paroi latérale interne de véhicule, à l'arrière du véhicule et qui est pourvu d'un raidisseur de suspension : la paroi latérale interne du véhicule comporte plusieurs éléments saillants rapportés par soudure, qui s'étendent sensiblement verticalement.

Un tel agencement est complexe à installer car il nécessite de positionner correctement les éléments les uns par rapport aux autres sur la paroi latérale interne et de les fixer ensemble par soudure par points.

Le document WO 2018/206868 décrit un dispositif pour limiter le débattement d'un cylindre d'amortisseur de véhicule, comportant une plaque qui est fixée sur une paroi latéral d'une carrosserie de véhicule.

L'invention vise à proposer une solution alternative plus simple à mettre en œuvre et plus efficace pour maintenir latéralement un cylindre d'amortisseur et pour permettre de transmettre les efforts vers le plancher du véhicule.

L'invention concerne à cet effet un dispositif pour limiter le débattement d'un cylindre d'amortisseur de véhicule, notamment automobile, apte à être fixée sur la paroi latérale arrière d'une carrosserie d'un véhicule automobile. Le dispositif conforme à l'invention est remarquable en ce qu'il comporte une plaque apte à être fixée sur ladite paroi latérale, portant au moins deux bossages symétriques de part et d'autre d'un axe de symétrie, les deux bossages étant saillants de ladite plaque et délimitant entre eux un passage qui s'étend suivant une direction parallèle audit axe de symétrie, ledit passage étant apte à accueillir au moins partiellement ledit cylindre d'amortisseur orienté suivant une direction parallèle audit axe de symétrie, les deux bossages s'étendant suivant un direction parallèle à audit axe de symétrie entre des première et seconde extrémités de bossage et présentant une hauteur de bossage variable entre lesdites première et seconde extrémités de bossage, ledit passage présentant une largeur sensiblement constante entre les deux bossages.

Ainsi réalisé, le dispositif constitue un ensemble à fixer sur la paroi de la carrosserie, ce qui simplifie le montage du dispositif dans le véhicule. Par ailleurs, la variation de hauteur des bossages permet de cibler l'endroit où le cylindre d'amortisseur prendra appui (en choisissant un positionnement judicieux du cylindre par rapport au dispositif).

Le dispositif conforme à l'invention peut également comporter les caractéristiques suivantes, prises séparément ou en combinaison :
Suivant un mode de réalisation avantageux, chaque bossage comprend une première partie de bossage et une seconde partie de bossage, la première partie de bossage présentant une hauteur qui croit entre la première extrémité de bossage et une partie sommitale de bossage présentant une hauteur maximum de bossage, et la seconde partie de bossage présentant une hauteur qui décroit entre la partie sommitale et la seconde extrémité de bossage, chacun des bossages présentant ainsi une section sensiblement en forme de V inversé. De cette façon, chaque bossage présente une partie spécifique, plus haute, qui est conçue pour recevoir davantage d'efforts du cylindre d'amortisseur.

En outre, la partie sommitale de chacun des bossages peut être prévue plus proche de la seconde extrémité de bossage que de la première extrémité de bossage. Suivant ce mode de réalisation, la zone plus haute du bossage se trouve vers la seconde extrémité des bossages, ce qui permet de cibler un amortissement du cylindre davantage en partie supérieure du cylindre d'amortisseur où les efforts sont les plus importants.

Suivant un mode de réalisation avantageux, ledit passage comporte une cavité dont la profondeur est croissante entre les premières extrémités des bossages et lesdites secondes extrémités des bossages. Cela permet d'augmenter encore la surface de contact entre l'extrémité du cylindre de l'amortisseur et les bossages, en seconde partie des bossages, vers la seconde extrémité.

Avantageusement encore, lesdits bossages présentent chacun une paroi latérale interne de bossage, contigüe audit passage, la paroi latérale interne de bossage étant inclinée par rapport audit fond dudit passage d'un angle supérieur à 90 °. L'angle suivant lequel le cylindre d'amortisseur entre en contact avec les bossages est plus doux et le contact entre le cylindre d'amortisseur et les parois latérales internes se fait davantage vers le bas des bossages.

En outre, le dispositif peut être réalisé en une seule pièce, par exemple par moulage ou emboutissage, suivant la nature du matériau dont il est composé. Par exemple, le dispositif sera de préférence réalisé en acier.

Il est avantageusement prévu de réaliser lesdits bossages creux, pour alléger au maximum le poids du dispositif.

L'invention concerne également un véhicule notamment automobile, comportant au moins un dispositif tel que défini ci-avant.

Dans le cadre d'un mode de réalisation préférentiel du véhicule conforme à l'invention, le cylindre d'amortisseur est placé entre les deux bossages dudit dispositif de manière que l'une des extrémités dudit cylindre d'amortisseur soit placée au droit de la seconde extrémité desdits bossages. Autrement dit, l'extrémité du cylindre d'amortisseur est placée au même niveau ou sensiblement au même niveau que la seconde extrémité des bossages.

De préférence encore, ledit dispositif est fixé sur une paroi latérale de carrosserie par rivetage de la plaque dudit dispositif sur ladite paroi latérale : il est ainsi aisé de fixer le dispositif avec des outils plus courants que si le dispositif devait être fixé par soudure par points.

Il peut également être prévu de réaliser la partie sommitale de chacun des bossages avec un plat, de manière que la partie sommitale s'étende sur une longueur de bossage, pour rendre les bossages plus épais ponctuellement.

D'autres avantages et caractéristiques de l'invention apparaîtront à l'examen de la description détaillée d'un mode de mise en œuvre nullement limitatif, et des dessins annexés, sur lesquels :
[Fig. 1] est une vue en perspective et partielle de la carrosserie arrière d'un véhicule, laissant apparaitre le coffre, les sièges arrières et une paroi latérale de carrosserie arrière sur laquelle est fixé un dispositif conforme à l'invention,
[Fig. 2] est une autre vue de profil, montrant le dispositif et le cylindre d'amortisseur montrés en figure 1 par-dessous,
[Fig. 3] est une autre vue de profil, illustrant un agrandissement du dispositif et du cylindre d'amortisseur montrés en figure 1,
[Fig. 4] est une vue en perspective illustrant le dispositif conforme à l'invention seule.

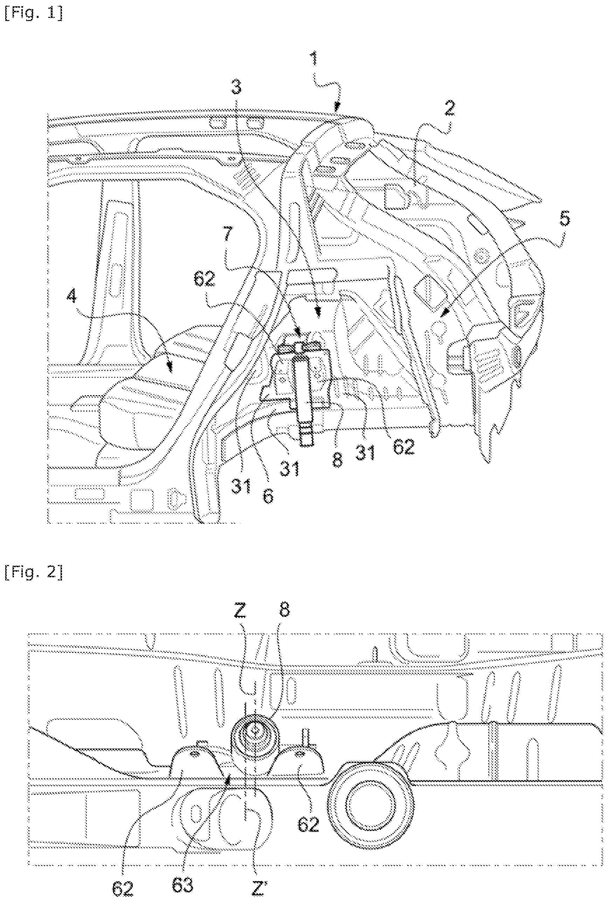

La figure 1 montre partiellement l'arrière d'un véhicule automobile 1, et en particulier la carrosserie 2.

On s'intéresse ici en particulier à la paroi 3 latérale arrière de la carrosserie, située derrière des sièges 4 dans le coffre 5 du véhicule automobile 1.

Le dispositif selon l'invention (référence 6) est conçu pour se fixer sur la paroi latérale 3 de la carrosserie et accueillir une partie supérieure d'un cylindre 8 d'amortisseur.

En effet, les cylindres d'amortisseur sont usuellement fixés en partie médiane de carrosserie, au niveau de la paroi latérale interne accessible par le coffre du véhicule.

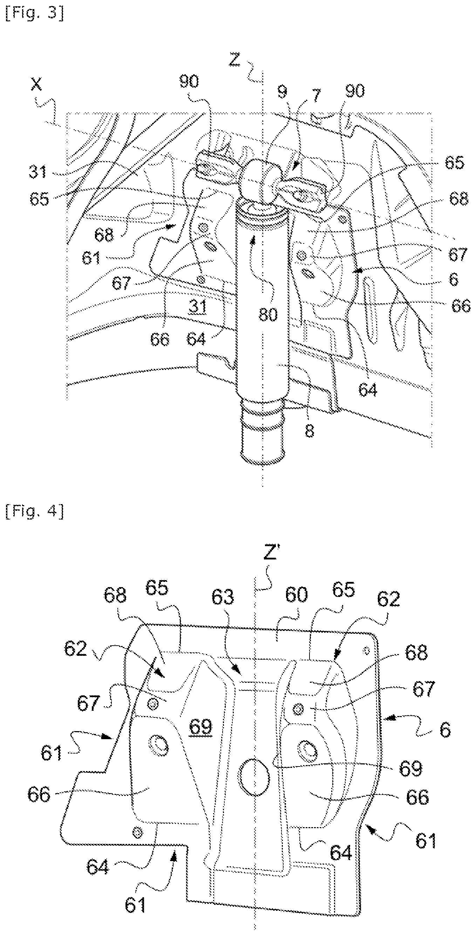

Un système de fixation 7 est particulièrement visible en figures 1 et 3 : le cylindre 8 est associé à un autre cylindre 9 dont l'axe X est perpendiculaire à l'axe Z du cylindre d'amortisseur 8.

Le cylindre 9, orienté perpendiculairement au cylindre d'amortisseur 8, est lui-même associé à deux éléments 90 qui présente chacun une section en forme de croix et qui s'étendent de part et d'autre du cylindre 9, dans l'axe X du cylindre 9.

Les deux éléments 90 sont retenus dans le véhicule 1 (éléments de retenus non illustrés) mais restent mobiles suivant l'axe X pour autoriser l'extrémité haute du cylindre 8 à se débattre latéralement autour de son axe Z.

Le dispositif 6 conforme à l'invention permet de limiter ce débattement latéral.

Il est montré en particulier en figure 4, seul, et fixé sur la paroir latérale 3 en figures 1 à 3.

Le dispositif 6 comporte une plaque 60, sensiblement plate, dont le contour présente une découpe qui suit la forme en relief de la paroi latérale 3 arrière du véhicule automobile : le contour de la plaque 60 comporte ainsi des découpes 61 qui permet au dispositif d'être plaqué contre une surface de paroi latérale 3 sensiblement plate entre des éléments en reliefs 31 qui peut présenter la paroi latérale 3 du véhicule (voir figure 1 notamment).

Conformément à l'invention, la plaque 60 porte deux bossages 62 saillants, sensiblement symétriques de part et d'autre d'un axe Z'.

Les deux bossages 62 saillants délimitent entre eux un passage 63 apte à accueillir ledit cylindre d'amortisseur 8. Le passage 63 s'étend suivant la direction de l'axe de symétrie Z', qui est parallèle à l'axe Z du cylindre d'amortisseur 8 quand il est positionné dans le passage 63 du dispositif 6 (voir figure 2). Le passage 63 présentant une largeur sensiblement constante entre les deux bossages. Cela permet au cylindre d'amortisseur 8 de pouvoir se débattre parallèlement à son axe dans le passage 63.

Il est d'ailleurs prévu que la largeur du passage soit légèrement plus grande que le diamètre du cylindre d'amortisseur 8, pour autoriser ce débattement.

Les deux bossages 62 s'étendent chacun entre deux extrémités 64 et 65 de bossage, dans une direction parallèle à l'axe de symétrie Z' et présentent chacun une hauteur de bossage variable entre leurs extrémités 64 et 65.

Ainsi réalisé, le dispositif consiste en une seule pièce à fixer sur la carrosserie car plaque 60 supporte les éléments visant à amortir latéralement le cylindre d'amortisseur 8. Le dispositif est donc simple à fixer sur la paroi.

Par ailleurs, la variation de hauteur sur les bossages 62 permet de cibler l'endroit du cylindre d'amortisseur 8 où les efforts sont les plus importants pour les transmettre. En particulier, chaque bossage 62 présente une section sensiblement en forme de V inversé : en effet, d'une part, une première partie de bossage 66 présente une hauteur qui croit entre la première extrémité 64 de bossage et une partie sommitale de bossage 67, la partie sommitale 67 présentant une hauteur maximum de bossage. D'autre part, une seconde partie de bossage 68 présente une hauteur qui décroit entre la partie sommitale de bossage 67 et la seconde extrémité de bossage 65.

Ainsi réalisé, chaque bossage présente une partie sommitale 67 au voisinage de laquelle le cylindre d'amortisseur 8 prendra davantage appui car offrant une surface d'appui plus importante.

Dans leur partie sommitale 67 de bossage, les bossages 62 supportent en effet les efforts les plus importants du cylindre d'amortisseur 8.

Comme il est montré en particulier sur les figures 1, 3 et 4, la partie sommitale 67 de chacun des bossages 62 est plus proche de la seconde extrémité 65 de bossage que de la première extrémité 64 de bossage (c'est-à-dire proche de l'extrémité qui est placée vers le haut quand le dispositif 6 est fixé sur la paroi de la carrosserie, l'autre extrémité 64 - c'est-à-dire la première extrémité de bossage - étant placée vers le bas).

Pour encore augmenter la surface de contact entre le cylindre d'amortisseur 8, il est prévu que le passage 63 soit en creux. Autrement dit, le passage 63 comporte une cavité. Dans le cadre de cet exemple de réalisation, il est prévu que la profondeur de la cavité est croissante entre les premières extrémités 64 des bossages 62 et les secondes extrémités 65 des bossages 62.

Cette variation croissante de la profondeur de la cavité du passage 63 assure également un contact en douceur avec le cylindre d'amortisseur 8.

De même, lesdits bossages 62 présentent chacun une paroi latérale interne 69 de bossage, contigüe audit passage 63, la paroi latérale interne 69 de chaque bossage 62 étant inclinée par rapport audit fond dudit passage d'un angle supérieur à 90° (également pour un guidage en douceur du cylindre 8 d'amortisseur) .

Pour assurer une réalisation solide et rapide du dispositif, il est prévu que les bossages 62, la cavité du passage 63 et la plaque 60 soient réalisés en une seule pièce, par exemple par moulage ou par emboutissage suivant la nature du matériau dans lequel est réalisé le dispositif (de préférence réalisé en acier).

Ainsi les bossage 62 sont de préférence creux, pour limiter le poids du dispositif fixé sur la paroi 3.

On remarque sur les figures que le cylindre d'amortisseur 8 est positionné dans le passage 63 de sorte que son extrémité supérieure 80 soit placée au droit de la seconde extrémité 65 desdits bossages 62 : de cette façon c'est la partie supérieure du cylindre d'amortisseur 8, qui génère le plus d'efforts qui se trouve positionnée ne face des partie sommitales 67 des bossages 62, c'est-à-dire des parties qui pouvoir transmettre le plus d'efforts notamment vers le plancher du véhicule automobile.

La fixation du dispositif 6 conforme à l'invention se fait par rivetage ou boulonnage de la plaque 60 dudit dispositif 6 et des bossages 62 sur ladite paroi latérale 3 : les moyens de fixation du dispositif sont donc classiques et plus aisés à mettre en œuvre que la fixation par soudure par points.

On comprend de la description qui précède comment l'invention permet d'amortir les efforts d'un cylindre d'amortisseur.

Il devra être compris que l'invention n'est pas limitée au mode de réalisation spécifiquement représenté sur les figures et qu'elle s'étend à la mise en œuvre de tout moyen équivalent, comme divulgué dans les revendications.

## Revendications

1. Dispositif (6) pour limiter le débattement d'un cylindre d'amortisseur (8) de véhicule (1), notamment automobile, apte à être fixé sur la paroi latérale (3) arrière d'une carrosserie(2) dudit véhicule, comportant une plaque (60) apte à être fixée sur ladite paroi latérale, **caractérisé en ce qu'**il porte au moins deux bossages (62) symétriques de part et d'autre d'un axe de symétrie (Z'), les deux bossages (62) étant saillants de ladite plaque (60) et délimitant entre eux un passage (63) qui s'étend suivant une direction parallèle audit axe de symétrie (Z'), ledit passage (63) étant apte à accueillir au moins partiellement ledit cylindre d'amortisseur (8) orienté suivant une direction (Z) parallèle audit axe de symétrie (Z'), les deux bossages (62) s'étendant suivant une direction parallèle audit axe de symétrie (Z') entre des première (64) et seconde (65) extrémités de bossage et présentant une hauteur de bossage variable entre lesdites première (64) et seconde (65) extrémités de bossage, ledit passage (63) présentant une largeur sensiblement constante entre les deux bossages (62).

2. Dispositif selon la revendication 1, **caractérisé en ce que** chaque bossage (62) comprend une première partie de bossage (66) et une seconde partie de bossage (68), la première partie de bossage (66) présentant une hauteur qui croit entre la première extrémité (64) de bossage et une partie sommitale (67) de bossage présentant une hauteur maximum de bossage, et **en ce que** la seconde partie de bossage (68) présente une hauteur qui décroit entre la partie sommitale (67) et la seconde extrémité de bossage (65), chacun des bossages (62) présentant ainsi une section sensiblement en forme de V inversé.

3. Dispositif selon la revendication 2, **caractérisé en ce que** ladite partie sommitale (67) de chacun des bossages est plus proche de la seconde extrémité (65) de bossage que de la première extrémité (64) de bossage.

4. Dispositif selon la revendication 2 ou 3, **caractérisé en ce que** ledit passage (63) comporte une cavité dont la profondeur est croissante entre lesdites premières extrémités (64) des bossages (62) et lesdites secondes extrémités (65) des bossages (62).

5. Dispositif selon l'une quelconque des revendications précédentes, **caractérisé en ce que** lesdits bossages (62) présentent chacun une paroi latérale interne (69) de bossage, contigüe audit passage (63), la paroi latérale interne (69) de bossage étant inclinée par rapport à un fond dudit passage (63) d'un angle supérieur à 90 °.

6. Dispositif selon l'une quelconque des revendications précédentes, **caractérisé en ce qu'**il est réalisé en une seule pièce.

7. Dispositif selon l'une quelconque des revendications précédentes, **caractérisé en ce que** lesdits bossages (62) sont creux.

8. Véhicule (1) notamment automobile comportant au moins un dispositif selon l'une quelconque des revendications précédentes.

9. Véhicule selon la revendication 8, **caractérisé en ce que** le cylindre d'amortisseur (8) est placé entre les deux bossages (62) dudit dispositif (6) de manière que l'une des extrémités (80) dudit cylindre d'amortisseur (8) soit placée au droit des secondes extrémités (65) desdits bossages.

10. Véhicule selon la revendication 8 ou 9, **caractérisé en ce que** ledit dispositif (6) est fixé sur une paroi latérale (3) de carrosserie (2) par rivetage de la plaque (60) dudit dispositif (6) sur ladite paroi latérale (3).

## Patentansprüche

1. Vorrichtung (6) zur Begrenzung der Auslenkung eines Dämpferzylinders (8) eines Fahrzeugs (1), insbesondere eines Kraftfahrzeugs, der an der hinteren Seitenwand (3) einer Karosserie (2) des Fahrzeugs befestigt werden kann, mit einer Platte (60), die an der Seitenwand befestigt werden kann, **dadurch gekennzeichnet, dass** sie mindestens zwei symmetrische Vorsprünge (62) auf beiden Seiten einer Achse trägt Symmetrieachse (Z'), wobei die beiden Vorsprünge (62) von der Platte (60) vorstehen und zwischen sich einen Durchgang (63) begrenzen, der sich in einer Richtung parallel zur Symmetrieachse (Z') erstreckt, wobei der Durchgang (63) dazu ausgelegt ist, den in einer Richtung (Z) parallel zur Symmetrieachse (Z') verlaufenden Dämpfungszylinder (8) zumindest teilweise aufzunehmen Die beiden Vorsprünge (62) erstrecken sich in einer Richtung parallel zu der Symmetrieachse (Z') zwischen einem ersten (64) und einem zweiten (65) Buckelende und weisen eine variable Buckhöhe zwischen dem ersten (64) und dem zweiten Buckelende (65) auf, wobei der Durchgang (63) eine im Wesentlichen konstante Breite zwischen den beiden Buckeln (62) aufweist (1)

2. Vorrichtung nach Anspruch 1, **dadurch gekennzeichnet, dass** jeder Vorsprung (62) einen ersten Vorsprung (66) und einen zweiten Vorsprung (68) aufweist, wobei der erste Vorsprung (66) eine Höhe aufweist, die zwischen dem ersten Vorsprung (64) und einem oberen Vorsprung (67) mit einer maximalen Vorsprungshöhe ansteigt, und dass der zweite Vorsprung Der Buckenteil (68) weist eine zwischen dem oberen Teil (67) und dem zweiten Buckenteil (65) abnehmende Höhe auf, wobei jeder der Buckel (62) einen im Wesentlichen umgekehrten V-förmigen Querschnitt aufweist.

3. Vorrichtung nach Anspruch 2, **dadurch gekennzeichnet, dass** der obere Teil (67) jedes der Vorsprünge näher an dem zweiten Vorsprungsende (65) liegt als an dem ersten Vorsprungsende (64).

4. Vorrichtung nach Anspruch 2 oder 3, **dadurch gekennzeichnet, dass** der Durchgang (63) einen Hohlraum aufweist, dessen Tiefe zwischen den ersten Enden (64) der Vorsprünge (62) und den zweiten Enden (65) der Vorsprünge (62) zunimmt.

5. Vorrichtung nach einem der vorhergehenden Ansprüche, **dadurch gekennzeichnet, dass** die Vorsprünge (62) jeweils eine an den Durchgang (63) angrenzende innere Vorsprungsseitenwand (69) aufweisen, wobei die innere Vorsprungsseitenwand (69) in Bezug auf einen Boden des Durchgangs (63) um einen Winkel von mehr als 90° geneigt ist.

6. Vorrichtung nach einem der vorhergehenden Ansprüche, **dadurch gekennzeichnet, dass** sie einstückig ausgebildet ist.

7. Vorrichtung nach einem der vorhergehenden Ansprüche, **dadurch gekennzeichnet, dass** die Vorsprünge (62) hohl sind.

8. Fahrzeug (1), insbesondere Kraftfahrzeug, das mindestens eine Vorrichtung nach einem der vorhergehenden Ansprüche aufweist.

9. Fahrzeug nach Anspruch 8, **dadurch gekennzeichnet, dass** der Dämpferzylinder (8) zwischen den beiden Erhebungen (62) der Vorrichtung (6) so angeordnet ist, dass eines der Enden (80) des Dämpferzylinders (8) an den zweiten Enden (65) der Erhebungen angeordnet ist.

10. Fahrzeug nach Anspruch 8 oder 9, **dadurch gekennzeichnet, dass** die Vorrichtung (6) an einer Seitenwand (3) der Karosserie (2) durch Nieten der Platte (60) der Vorrichtung (6) an der Seitenwand (3) befestigt ist.

## Claims

1. Device (6) to limit the flow of a shock absorber cylinder (8) of a vehicle (1), including an automobile, capable of being fixed on the side wall (3) rear of a body(2) of that vehicle, having a plate (60) capable of being fixed on that side wall, in so far as it bears at least two (62) symmetrical movements on both sides of an axis of symmetry (Z'), the two bosses (62) being prominent of the said plate (60) and delimiting between them a passage (63) extending in a parallel direction to that axis of symmetry (Z'), the said passage (63) being capable of accommodating at least partially the said cylinder of shock absorber (8) oriented in a parallel direction (Z) axis of symmetry (Z'), the two bosses (62) extending in a parallel direction with the same axis of symmetry (Z') between the first (64) and second (65) bossings and having a variable bossing height between the said first (64) and second (65) bossings, the said passage (63) having a substantially constant width between the two bossings (62).

2. A device according to Claim 1, characterized that each boss (62) includes a first part of boss (66) and a second part of boss (68), the first part of boss (66) with a height that grows between the first end (64) of boss and a top part (67) of boss with a maximum height of boss, and in that the second part of the boss (68) has a height that decreases between the top part (67) and the second end of the boss (65), each of the bosses (62) thus having a section substantially in the shape of a reverse V.

3. A device according to Claim 2, **characterized in that** the said summital part (67) of each boss is closer to the second end (65) of boss than to the first end (64) of boss.

4. A device according to claim 2 or 3, **characterized in that** passage (63) has a cavity whose depth is increasing between the said first ends (64) of the bosses (62) and the said second ends (65) of the bosses (62).

5. A device according to any of the preceding claims, **characterized in that** the said bosses (62) each have an internal lateral wall (69) of bossing, contiguous to that passage (63), with the internal lateral wall (69) of bossing inclined to a bottom of that passage (63) at an angle greater than 90 °.

6. A device according to any of the previous claims, **characterized in that** it is realized in one piece.

7. Device according to any of the previous claims, characterized as the said bosses (62) are hollow.

8. Vehicle (1) including motor vehicle incorporating at least one device in accordance with any of the preceding claims.

9. Vehicle according to claim 8, **characterized in that** the damper cylinder (8) is placed between the two bosses (62) of the said device (6) so that one end (80) of the said damper cylinder (8) is placed at the right of the second ends (65) of the said bosses.

10. Vehicle according to claim 8 or 9, characterized as the said device (6) is fixed on a side wall (3) of bodywork (2) by riveting the plate (60) of the said device (6) on the said side wall (3).
